# EUROPÄISCHE PATENTSCHRIFT

(11) **EP 0 640 385 B1**
(45) Veröffentlichungstag und Bekanntmachung des Hinweises auf die Patenterteilung: **20.05.1998**
(21) Anmeldenummer: 93810612.7
(22) Anmeldetag: 26.08.1993
(51) Int. Cl.: B01J 19/32, B01J 20/28, B01D 3/00, B01D 53/02

(54) **Packung mit katalytischen oder adsorbierenden Mitteln**
Packing with catalysts or adsorbants
Garnissage avec des matériaux catalytiques ou adsorbants

(43) Veröffentlichungstag der Anmeldung: 01.03.1995
(73) Patentinhaber: Sulzer Chemtech AG, CH-8404 Winterthur (CH)
(72) Erfinder: Ghelfi, Lorenzo, CH-8610 Uster (CH); Stringaro, Jean-Paul, Dr., CH-8180 Bülach (CH)
(74) Vertreter: Heubeck, Bernhard

(56) Entgegenhaltungen:
- WO-A-90/00926
- WO-A-90/02603
- US-A- 4 443 559

## Beschreibung

Die Erfindung betrifft eine Packung gemäss Oberbegriff von Anspruch 1. Derartige Vorrichtungen sind aus der EP-PS 0 396 650 bzw. EP-PS 0 367 717 bekannt. Die Packungselemente der bekannten Vorrichtungen weisen Packungsteile mit Doppelwänden auf; zwischen die Doppelwände ist ein entsprechend dem Verwendungszweck gewähltes Katalysatormaterial oder ein adsorptionsfähiges Material eingebracht.

Die Strömungskanäle zwischen den Packungsteilen bilden eine statische Mischerstruktur. Dank dieser Mischerstruktur ergibt sich ein für die Reaktion vorteilhafter Temperatur-, Geschwindigkeits- und Konzentrationsausgleich über den Kolonnenquerschnitt. Vorteilhaft ist überdies, dass die Druckabfälle relativ gering sind.

Nachteil der bekannten Vorrichtung ist, dass die Packungsteile eine mechanische Stabilität aufweisen müssen, die ein Aufeinanderstapeln der Packungselemente erlaubt, und dass sich gleichzeitig durch die Struktur der Packungsteile ein System von Strömungskanälen ergeben muss. Überdies müssen die Packungsteile ihre vorgegebene Form beim Füllen mit dem Katalysator- bzw. Adsorptionsmaterial beibehalten. Es ist Aufgabe der Erfindung, die bekannte Vorrichtung in einer Weise weiterzubilden, dass die Anforderungen an die Struktur der Packungsteile leichter zu erfüllen sind. Ferner soll ein Packungselement in einer Weise aufgebaut sein, dass sich die Packungsteile leicht auswechseln lassen.

Diese Aufgabe wird durch die kennzeichnenden Merkmale des Anspruchs 1 gelöst. Dabei wird unter zylindrischer Form eine Form verstanden, die aus einer beliebigen Fläche (z.B. einem "Dreieck" mit abgerundeten Ecken) durch Parallelverschieben längs der Flächennormale erzeugbar ist.

Die abhängigen Ansprüche betreffen vorteilhafte Ausführungsformen der erfindungsgemässen Packung. Die Erfindung bezieht sich auch auf Verwendungen dieser Packung: nämlich die Anwendung auf einen katalytischen Destillationsprozess (vgl. EP-PS 0 396 650), zum Herstellen z.B. von MTBE (Methyl-tertiär-Butyl-Ether), ETBE (Ethyl-tertiär-Butyl-Ether) oder TAME (tertiär-Amyl-Methyl-Ether); oder die Anwendung auf Adsorptionsprozesse.

Ist die erfindungsgemässe Packung für zwei fluide Phasen - beispielsweise eine gasförmige und eine flüssige - vorgesehen, so können die beiden Phasen sowohl im Gegenstrom als auch im Gleichstrom geführt werden. Die zwei Phasen können auch beide flüssig sein, wenn sie nicht vermischbar sind und verschiedene Dichten aufweisen. Ein Reaktor mit der erfindungsgemässen Packung kann beispielsweise auch eine Rieselbett- oder eine Blasenkolonne sein.

Nachfolgend wird die Erfindung anhand der Zeichnungen näher beschrieben. Es zeigen:
- Fig. 1: ausschnittsweise eine untere Zone eines erfindungsgemässen Packungsteils,
- Fig. 2: ausschnittsweise eine Ansicht eines Packungselements und einer zugehörigen Trägerstruktur
- Fig. 3: ein zweites Packungsteil,
- Fig.4a: ausschnittsweise einen Querschnitt durch ein Packungselement mit einer zweiten Trägerstruktur,
- Fig.4b: eine Seitenansicht des Packungselements der Fig.4a, das längs einer Lage geöffnet ist,
- Fig. 5: eine Variante zum Packungselement der Fig.4a,
- Fig. 6: ein ebenes Gitter mit rautenförmigen Teilflächen,
- Fig. 7: das zickzackförmig gefaltete Gitter der Fig.6, und
- Fig. 8: ausschnittsweise einen Längsschnitt durch einen erfindungsgemässen Reaktor.

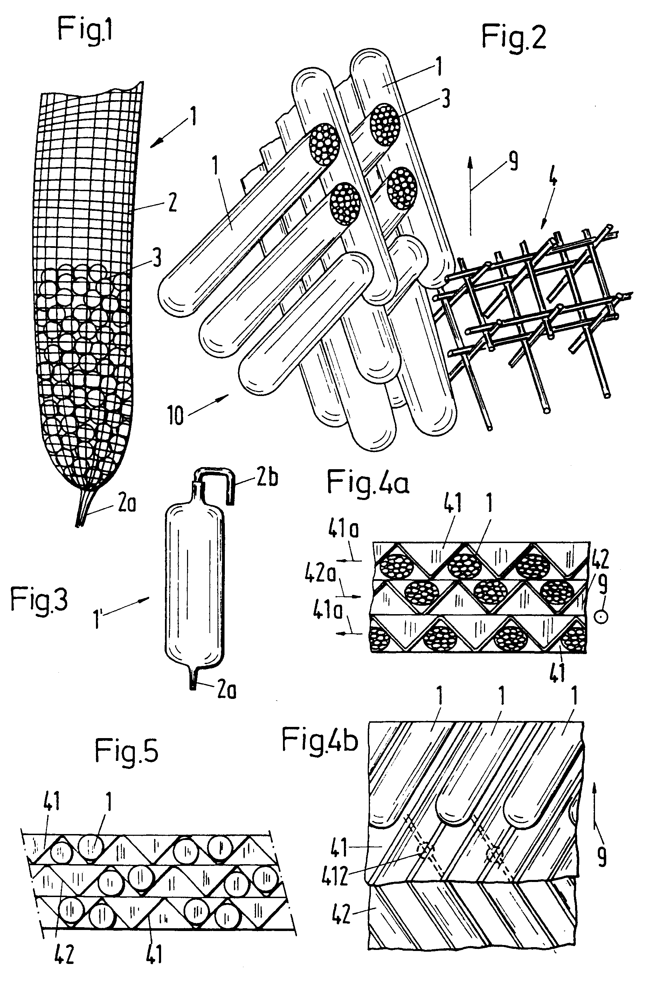

Das in Fig.1 gezeigte Packungsteil 1 besteht aus einem strumpfartigen Gebinde 2, das einen unteren Abschluss 2a aufweist und das teilweise mit einem Katalysatorgranulat 3 gefüllt ist. Das die Wand 2 des Packungsteils 1 bildende Gebinde 2 wird mit Vorteil als Geflecht oder Gewirk aus einem dünnen Metalldraht (Drahtdurchmesser rund 0.1 bis 0.2 mm) gefertigt. Dieses Gebinde 2 erhält erst durch die Füllung mit dem schüttgutartigen Katalysatormaterial eine gewisse Formstabilität. Das Packungsteil 1 ist beispielsweise zigarrenförmig und weist einen zumindest angenähert kreisförmigen Querschnitt auf. Es kann aber auch eine zylindrische Form mit beispielsweise einem ovalen Querschnitt aufweisen. Es sind auch andere Querschnittsformen denkbar.

Für das Füllen des Packungsteils 1 mit dem Katalysatormaterial 3 ist eine vibrierende Vorrichtung hilfreich. Es ist von Vorteil, nach dem Füllen das Gebinde 2 oben mit einer Klammer (nicht dargestellt) oder einem andern Verbindungsmittel zu verschliessen. Dieses Verbindungsmittel soll leicht entfernbar und ersetzbar sein, damit für den Fall, dass das Katalysator- oder Adsortionsmaterial ausgetauscht werden muss, das Packungsteil 1 einfach entleerbar und somit gut wiederverwendbar ist.

Das gefüllte sowie verschlossene Packungsteil 1 wird in eine Trägerstruktur 4 - siehe Fig.2 - eingelegt. Eine Vielzahl von Packungsteilen 1 bildet ein Packungselement 10. In Fig.2 sind der Übersichtlichkeit halber auf der rechten Seite lediglich ein Ausschnitt aus der Trägerstruktur 4 und auf der linken Seite die Anordnung der Packungsteile 1 dargestellt. Durch diese Anordnung ist im wesentlichen eine statische Mischerstruktur gegeben, wie sie aus der EP-PS 0 070 917 bekannt ist.

Das Packungselement 10 ist aus längs der Hauptströmungsrichtung 9 ausgerichteten Lagen aufgebaut. Die Lagen werden durch eine Mehrzahl parallel liegender Packungsteile 1 gebildet. Zwischen den Packungsteilen befinden sich Strömungskanäle, die bezüglich der Hauptströmungsrichtung 9 geneigt sind, die sich kreuzen und die gegeneinander offen sind.

Als Trägerstruktur für die Packungsteile 1 kommt beispielsweise die aus der EP-PS 0 070 917 bekannte Struktur mit streifenförmigen Teilen in Frage. In Fig.2 ist eine Trägerstruktur 4 gezeigt, die in Form eines dreidimensionalen Gitters vorliegt. Dieses Gitter setzt sich aus Stäben oder Drähten zusammen, die an den Kreuzungsstellen miteinander verbunden sind. Die Trägerstruktur 4 weist Kanäle auf, in die die Packungsteile 1 eingelegt werden können. Die Packungsteile 1 weisen mit Vorteil Mittel auf, mittels derer sie sich in die Trägerstruktur (4) einhängen lassen: z.B. einen Haken 2b am oberen Ende - siehe Fig.3.

Die Packungsteile 1 haben zum Teil verschiedene Längen (vgl. Fig.2). Um eine einheitliche Länge zu ermöglichen, kann man auch kurze Packungsteile 1' (siehe Fig.3) vorsehen; in den langen Kanäle der Trägerstruktur 4 werden in diesem Fall zwei oder mehr Packungsteile 1' linear hintereinander angeordnet. Die Kanäle der Trägerstruktur 4 können zum Teil leer bleiben oder nur teilweise mit Packungsteilen 1 bzw. 1' belegt sein.

Als statische Mischerstrukturen sind Packungen von gewellten oder zickzackartig gefalteten Flächen bekannt (siehe z.B. DE-PS 27 22 424). Solche Mischerstrukturen lassen sich ebenfalls als Trägerstrukturen verwenden. Ein Beispiel ist in den Figuren 4a (Blick gegen Hauptströmungsrichtung 9) und 4b (Blick senkrecht zur Hauptströmungsrichtung 9) gezeigt. Gewellte Flächen 41 und 42, die an den Kämmen Kontaktstellen 412 aufweisen, bilden eine Struktur mit sich kreuzenden Kanälen. Die Pfeile 41a und 42a deuten die Neigungsrichtungen der Kanäle an. Beim Beispiel der Fig.4a sind die Kanäle zwischen benachbarten Flächen 41 und 42 alternierend mit Packungsteilen 1 belegt bzw. nicht belegt. Wie Fig.4b zeigt, sind die Kanäle im vorliegenden Beispiel nur teilweise belegt. Eine andere Anordnung der Packungsteile 1 ist in Fig.5 schematisch dargestellt. Es sind auch weitere Anordnungen denkbar, die nicht dargestellt sind. Beispielsweise ist es möglich, alle Kanäle mit Packungsteilen 1 zu belegen.

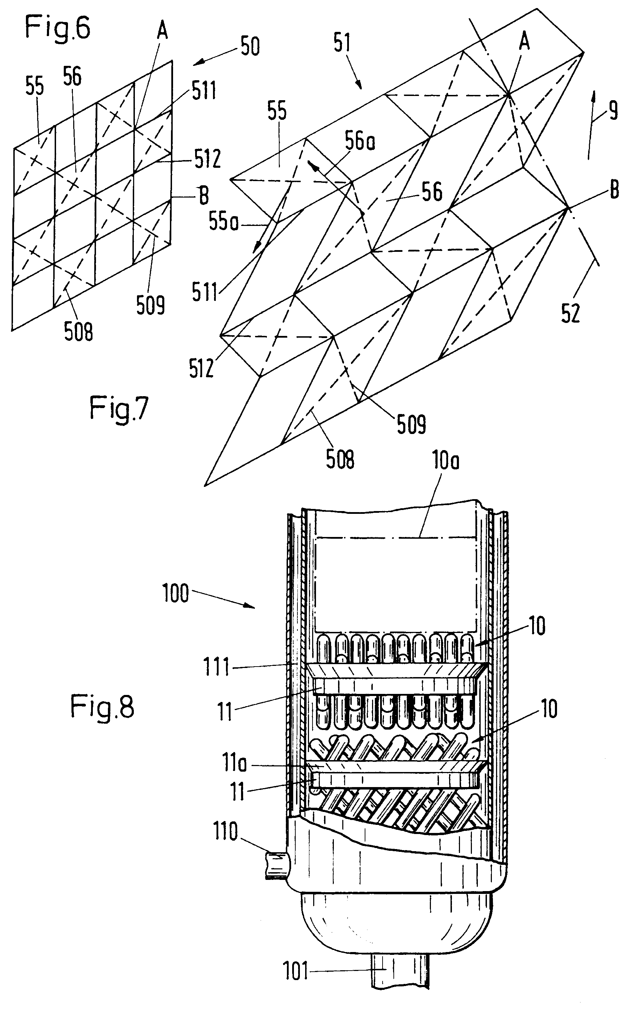

Als weitere Trägerstrukturen kommen "Wirbelpackungen" in Frage, die aus der EP-PS 0 221 095 und der WO 90/10497 bekannt sind. Die Packung, die in der zweitgenannten Druckschriften beschrieben ist, lässt sich auch durch zickzackartig gefaltete Flächen herstellen. Dabei weist die einzelne Fläche rautenförmige Teilflächen auf, die schachbrettartig angeordnet sind, wobei die einen Teilflächen als Öffnungen ausgebildet sind. Die Figuren 6 und 7 lassen sich zur Illustration heranziehen. Die ebene, gitterartige Fläche 50 der Fig.6, die als Ausschnitt einer grösseren Fläche zu verstehen ist, geht durch Kantung längs der Linien 511, 512 in die gefaltete Fläche 51 der Fig.7 über. Die rautenförmigen Teilfächen 55, 56, deren Diagonalen 508 und 509 gestrichelt eingezeichnet sind, können als geschlossene Teilflächen der Wirbelpackung angesehen werden. Eine zweite gefaltete Fläche, die nicht dargestellt, wird angrenzend an die Fläche 51 angeordnet; dabei verlaufen die Faltkanten dieser zweiten Fläche in Richtung der strichpunktierten Geraden 52. Die beiden Punkte A und B, die auf der Geraden 52 liegen, stellen Berührungspunkte zwischen den beiden gefalteten Flächen dar. Die Wirbelpackung ergibt sich durch weiteres Anfügen entsprechender Flächen.

Als Trägerstruktur für das erfindungsgemässe Packungselement kommt die bekannte Wirbelpackung in Frage. Es ist aber auch möglich, ein dieser Packung entsprechendes dreidimensionales Gitter vorzusehen, dessen Sprossen lagenweise gemäss den ausgezogenen Teilflächen-Kanten der Fläche 51, Fig.7, angeordnet sind. Die Packungsteile 1 lassen sich in die durch die Faltung gegebenen Kanäle (= "erstes Kanalsystem") einlegen.

Die Wirbelpackung hat die Symmetrieeigenschaft, dass nach einer 90°-Drehung um eine Achse, die parallel zur Hauptströmungsrichtung 9 ist, die Struktur wieder die urprüngliche Anordnung von offenen und geschlossenen Teilflächen zeigt. D.h. es existiert ein zweites System von sich kreuzenden Kanälen, die quer zu den Kanälen des ersten Kanalsystem, nämlich in Richtung der Pfeile 55a und 56a, verlaufen. Die Packungsteile 1 lassen sich auch in diese querlaufenden Kanäle einlegen. Wird die Trägerstruktur aus gitterartigen Lagen - entsprechend der Fläche 51 in Fig.7 - zusammengesetzt, so üben die quer eingelegten Packungsteile einen das Packungselement verstärkenden Effekt aus.

Fig.8 zeigt den unteren Teil eines Reaktors 100 (mit kreisförmigem Querschnitt) mit einer erfindungsgemässen Packung, in welchem die Packungselemente 10 stapelartig angeordnet sind. Benachbarte Packungselemente sind jeweils um einen Winkel von 90° gegeneinander versetzt. Die oberen Packungselemente sind mit strichpunktierten Randlinien 10a angedeutet. Ein Kragen 11 mit lappenartigen Vorsprüngen 11a umschliesst jeweils ein Packungselement 10. Der Stutzen 101 ist für den Zu- oder Abfluss des fluidförmigen Mediums vorgesehen. Die Abfuhr von Reaktionswärme kann über einen Kühlmantel 111 (Kühlmittelstutzen 110) erfolgen.

In der EP-PS 0 396 650 ist vorgesehen, auch Katalytlösungen oder flüssige Katalysatormaterialien zu verwenden. Dies ist auch für den hier beschriebenen Reaktor möglich, wenn beispielsweise die Wände der Packungsteile zweischichtig ausgebildet werden, wobei die eine Schicht aus einer flüssigkeitsdichten, für das fluidförmige Medium permeablen Membran besteht und die andere Schicht eine perforierte Stützstruktur bildet.

## Patentansprüche

1. Packung mit katalytischen oder adsorbiernden Mitteln für mindestens ein fluidförmiges Medium, mit stapelartig angeordneten Packungselementen (10), die aus längs der Hauptströmungsrichtung (9) des Mediums ausgerichteten Lagen aufgebaut sind, wobei die Lagen durch Packungsteile (1) gebildet sind, die für das Medium durchlässige Wände (2) aufweisen und ein Katalysator- oder Adsortionsmaterial (3) enthalten, und wobei zwischen den Packungsteilen Strömungskanäle, die sich kreuzen und gegeneinander offen sind, vorhanden sind,
dadurch gekennzeichnet, dass die Lagen jeweils durch eine Mehrzahl von Packungsteilen (1) gebildet sind, dass die Packungselemente (10) Trägerstrukturen (4) aufweisen, in welche die Packungsteile eingelegt sind, und dass die Packungsteile im wesentlichen zylinderförmig sind.

2. Packung nach Anspruch 1, dadurch gekennzeichnet, dass das Katalysator- oder Adsortionsmaterial (3) in Form eines schüttgutartigen Granulats vorliegt.

3. Packung nach Anspruch 1 oder 2, dadurch gekennzeichnet, dass die Wände (2) der Packungsteile (1) aus Drahtgeflechten oder Drahtgewirken bestehen.

4. Packung nach einem der Ansprüche 1 bis 3, dadurch gekennzeichnet, dass die Trägerstruktur (4) aus einem dreidimensionalen Gitter besteht.

5. Packung nach einem der Ansprüche 1 bis 3, dadurch gekennzeichnet, dass die Trägerstruktur (4) die Form einer statischen Mischerstruktur aufweist.

6. Packung nach einem der Ansprüche 4 oder 5, dadurch gekennzeichnet, dass die Trägerstruktur (4) aus zickzackartig gefalteten Flächen (41, 42; 51) aufgebaut ist.

7. Packung nach einem der Ansprüche 1 bis 6, dadurch gekennzeichnet, dass die Packungsteile Mittel aufweisen, mittels derer sie in der Trägerstruktur (4) eingehängt sind.

8. Packung nach einem der Ansprüche 1 bis 6, dadurch gekennzeichnet, dass die Trägerstruktur (4) Kanäle aufweist und dass zumindest in einzelnen dieser Kanäle zwei oder mehr Packungsteile linear angeordnet sind.

9. Packung nach Anspruch 1, dadurch gekennzeichnet, dass die Wände (2) der Packungsteile zweischichtig ausgebildet sind, wobei die eine Schicht aus einer flüssigkeitsdichten, für das Medium permeablen Membran besteht und die andere Schicht eine perforierte Stützstruktur bildet, und dass der Katalysator in Form einer Flüssigkeit vorliegt.

10. Verwendung der Packung nach einem der Ansprüche 1 bis 9 in einem Festbettreaktor für einen katalytischen Destillationsprozess, bei dem eine katalytische Reaktion mit einem Destillations- oder Rektifikationsprozess kombiniert ist.

11. Verwendung der Packung nach einem der Ansprüche 1 bis 9 in einer Adsorptionskolonne.

## Claims

1. A packing having catalytic or adsorbent agents for at least one fluid medium, having packing elements (10) disposed in stacks, which are assembled from layers aligned along the main direction of flow (9) of the medium, wherein the layers are formed by packing parts (1), which comprise walls (2) permeable for the medium and contain a catalyst or adsorption material (3), and wherein between the packing parts are provided flow ducts, which intersect and are open to one another, **characterised in that** in each case the layers are formed by a plurality of packing parts (1),
**in that** the packing elements (10) comprise support structures (4) into which the packing parts are inserted,
**and in that** the packing parts are substantially cylindrical.

2. A packing according to Claim 1,
**characterised in that** the catalyst or adsorption material (3) is provided in the form of a bulky granulate.

3. A packing according to Claim 1 or 2,
**characterised in that** the walls (2) of the packing parts (1) are made from wire braid or knitted wire cloth.

4. A packing according to one of Claims 1 to 3,
**characterised in that** the support structure (4) is made from a three-dimensional lattice.

5. A packing according to one of Claims 1 to 3,
**characterised in that** the support structure (4) takes the form of a static mixer structure.

6. A packing according to one of Claims 4 or 5,
**characterised in that** the support structure (4) is assembled from faces (41, 42; 51) folded zig-zag fashion.

7. A packing according to one of Claims 1 to 6,
**characterised in that** the packing parts have means by which they are suspended in the support structure (4).

8. A packing according to one of Claims 1 to 6,
**characterised in that** the support structure (4) comprises ducts,
**and in that** two or more packing parts are disposed in linear manner at least in some of the ducts.

9. A packing according to Claim 1,
**characterised in that** the walls (2) of the packing parts are constructed in two layers, whereby the one layer consists of a fluid-tight membrane permeable for the medium and the other layer forms a perforated support structure,
**and in that** the catalyst is present in fluid form.

10. The use of the packing according to one of Claims 1 to 9 in a fixed-bed reactor for a catalytic distillation process, in which a catalytic reaction is combined with a distillation or rectification process.

11. The use of the packing according to one of Claims 1 to 9 in an adsorption column.

## Revendications

1. Garnissage avec des matériaux catalytiques ou adsorbants pour au moins un agent fluide, avec des éléments de garnissage agencés en piles (10), qui sont construits de couches dirigées le long de la direction principale d'écoulement (9) de l'agent, les couches étant formées des pièces de garnissage (1), qui présentent des parois perméables (2) pour l'agent et contiennent un matériau catalyseur ou d'adsorption (3), où entre les pièces de garnissage sont prévus des canaux d'écoulement qui se croisent et sont mutuellement ouverts,
caractérisé en ce que les couches sont formées à chaque fois d'un certain nombre de pièces de garnissage (1), en ce que les éléments de garnissage (10) présentent des structures de support (4) dans lesquelles sont placées les pièces de garnissage et en ce que les pièces de garnissage sont de forme essentiellement cylindrique.

2. Garnissage selon la revendication 1, caractérisé en ce que le matériau catalyseur ou d'adsorption (3) est présent sous la forme d'un granulé pulvérulent.

3. Garnissage selon la revendication 1 ou 2, caractérisé en ce que les parois (2) des pièces de garnissage (1) se composent d'un tricotage ou d'un tissage de fils métalliques.

4. Garnissage selon l'une des revendications 1 à 3, caractérisé en ce que la structure de support (4) se compose d'un treillis tridimensionnel.

5. Garnissage selon l'une des revendications 1 à 3, caractérisé en ce que la structure de support (4) présente la forme d'une structure de mélangeur statique.

6. Garnissage selon l'une des revendications 4 ou 5, caractérisé en ce que la structure de support (4) est formée de surfaces pliées en zigzag (41, 42 ; 51).

7. Garnissage selon l'une des revendications 1 à 6, caractérisé en ce que les pièces de garnissage présentent des moyens, par lesquels elles sont suspendues dans la structure de support (4).

8. Garnissage selon l'une des revendications 1 à 6, caractérisé en ce que la structure de support (4) présente des canaux et en ce qu'au moins dans certains de ces canaux sont agencées linéairement deux pièces de garnissage ou plus.

9. Garnissage selon la revendication 1, caractérisé en ce que les parois (2) des pièces de garnissage sont en deux couches, la première couche se compose d'une membrane étanche au liquide, perméable à l'agent, et l'autre couche forme une structure perforée de soutien et en ce que le catalyseur est présent sous la forme d'un liquide.

10. Utilisation du garnissage selon l'une des revendications 1 à 9 dans un réacteur à lit fixe pour un procédé de distillation catalytique où une réaction catalytique est combinée à un procédé de distillation ou de rectification.

11. Utilisation du garnissage selon l'une des revendications 1 à 9 dans une colonne d'adsorption.
